(19) Europäisches Patentamt
European Patent Office
Office européen des brevets

(11) **EP 3 986 191 B1**

(12) **FASCICULE DE BREVET EUROPEEN**

(45) Date de publication et mention de la délivrance du brevet:
**05.07.2023 Bulletin 2023/27**

(21) Numéro de dépôt: **20743194.1**

(22) Date de dépôt: **28.05.2020**

(51) Classification Internationale des Brevets (IPC):
**A41H 43/02** (2006.01)  **B23K 26/08** (2014.01)
**B23K 26/38** (2014.01)  **B26D 5/00** (2006.01)
**B26F 1/38** (2006.01)  **G05B 19/418** (2006.01)
**B23K 103/00** (2006.01)

(52) Classification Coopérative des Brevets (CPC):
**A41H 43/02; B26D 5/005; B26F 1/38;**
**G05B 19/41865;** B26D 2005/002;
G05B 2219/35005; G05B 2219/35162;
G05B 2219/35188; G05B 2219/45196

(86) Numéro de dépôt international:
**PCT/FR2020/050899**

(87) Numéro de publication internationale:
**WO 2020/254739 (24.12.2020 Gazette 2020/52)**

(54) **PROCÉDÉ DE PLACEMENT DE PIÈCES DESTINÉES À ÊTRE DÉCOUPÉES DE FAÇON AUTOMATIQUE DANS UN TISSU À MOTIF**

VERFAHREN ZUM AUSLEGEN VON AUTOMATISCH ZU SCHNEIDENDEN TEILEN IN GEMUSTERTES GEWEBE

METHOD FOR LAYING OUT PIECES BE CUT AUTOMATICALLY INTO A PATTERNED FABRIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2019 FR 1906727**

(43) Date de publication de la demande:
**27.04.2022 Bulletin 2022/17**

(73) Titulaire: **Lectra**
**75016 Paris (FR)**

(72) Inventeurs:
• **BARBE, Stéphane**
**33600 PESSAC (FR)**
• **MOREAU, Patrick**
**33650 LA BREDE (FR)**
• **FERNANDES, Sébastien**
**33600 PESSAC (FR)**

(74) Mandataire: **Cabinet Beau de Loménie**
**158, rue de l'Université**
**75340 Paris Cedex 07 (FR)**

(56) Documents cités:
**EP-A1- 0 759 708    EP-A2- 0 518 473**

**Description**

Domaine Technique

La présente invention se rapporte au domaine général de la coupe automatique de pièces dans un tissu à motif se répétant selon un pas prédéterminé.

Des domaines d'application de l'invention sont notamment les industries de l'habillement et de l'ameublement.

Technique antérieure

Lorsque la réalisation d'articles d'habillement ou d'éléments d'ameublement implique un assemblage de pièces coupées dans un tissu, il existe des contraintes particulières si le tissu est à motif, l'expression « tissu à motif » désignant ici toute matière textile souple en feuille imprimée avec un motif qui se répète avec des pas réguliers et prédéterminés.

Dans ce cas, il est alors souhaitable, voire nécessaire, de respecter la continuité du motif entre deux pièces assemblées, par exemple deux parties d'un vêtement cousues l'une à l'autre, ou deux pièces destinées à être voisines, par exemple deux parties de vêtement situées côte à côte lorsque le vêtement est porté, ou deux coussins d'un canapé posés côte à côte.

Afin de respecter ces contraintes, il est connu d'associer aux pièces des repères de position absolue ou relative et d'établir une hiérarchie entre pièces principales et pièces secondaires.

Un repère de position absolue est normalement associé à une pièce principale. Il caractérise le positionnement absolu de la pièce principale par rapport au motif du tissu. La position d'une pièce par rapport au motif est caractérisée par le fait qu'un point donné de la surface de la pièce occupe une position relative déterminée par rapport aux motifs qui l'entourent. Ainsi, des pièces dont les emplacements à la surface du tissu se déduisent les unes des autres par des translations d'un nombre entier de pas de motif occupent une même position par rapport au motif.

Des repères de position relative sont associés à deux pièces devant être assemblées en tenant compte d'impératifs liés à l'existence du motif. Ils identifient les emplacements de deux points de liaison devant être amenés en correspondance lors de l'assemblage des pièces.

Par exemple, dans le cas d'une veste, une pièce de devant peut constituer une pièce principale. Un repère de position absolue est éventuellement associé à la pièce de devant par exemple lorsque l'on désire qu'un motif complet soit visible en un emplacement particulier de cette pièce. Une manche, l'encolure, un rabat de poche constituent alors des pièces secondaires. Pour chacune de celles-ci, l'emplacement d'un point de raccord est déterminé pour correspondre à l'emplacement du point de raccord associé sur la pièce principale.

Par ailleurs, il est connu de réaliser la coupe de tissu de façon automatique. Des installations de coupe automatique sont commercialisées par la demanderesse depuis de nombreuses années.

Typiquement, un procédé de coupe automatique comprend une opération de placement qui consiste à déterminer de façon optimale les positions des pièces à couper dans une bande de tissu. Le placement est choisi de façon à minimiser les pertes de tissu tout en respectant certaines contraintes : respect du droit fil, marge minimale suffisante entre pièces, etc... Dans le cas d'un tissu à motif, s'ajoutent les contraintes liées au respect des emplacements des repères de position absolue et de position relative. Des systèmes permettant à un opérateur de définir des placements à l'aide de stations de travail informatiques et de logiciels spécialisés sont connus, y compris dans le cas de tissus à motifs.

Afin d'effectuer la coupe, le tissu est étalé sur une table de coupe en une ou plusieurs couches superposées qui peuvent être maintenues par aspiration à travers la table. La coupe est effectuée au moyen d'un outil porté par une tête dont les déplacements, par rapport à la table de coupe, sont commandés en fonction du placement prédéterminé. La coupe peut être effectuée par lame vibrante, laser, jet d'eau, etc.

Des difficultés apparaissent lorsque le tissu utilisé est à un tissu à motif. En particulier, se pose en pratique le problème de la non-coïncidence entre le modèle de tissu utilisé pour le placement et le tissu réellement étalé sur la table de coupe. Cette non-coïncidence se traduit notamment de la façon suivante. Si l'on se place sur la table de coupe aux coordonnées d'un point de référence d'une pièce du placement, on constate que le point correspondant sur le tissu étalé n'occupe pas toujours la position relative souhaitée par rapport au motif du tissu réel. Ces écarts sont plus ou moins grands et en pratique inévitables. Ils tiennent à des défauts d'impression et/ou à des déformations du tissu qui peuvent se traduire par des irrégularités dans le pas de répétition du motif. Il en résulte que le placement préétabli, ou placement théorique, doit être modifié pour correspondre à la réalité du tissu étalé.

Un procédé pour effectuer cette modification de placement de façon automatique est décrit dans le document EP 0,759,708 déposé au nom de la demanderesse. Après étalement du tissu à motif sur la table de coupe, ce procédé prévoit de détecter un décalage éventuel entre le pas réel du motif sur le tissu et le pas théorique de celui-ci grâce à une saisie d'images de parties du tissu étalé puis d'une vérification sur les images saisies que des emplacements correspondant à des informations mémorisées occupent des positions voulues par rapport au motif réel du tissu étalé. Le cas échéant, le placement théorique des pièces est modifié en fonction du résultat du contrôle afin de l'adapter au pas réel du motif sur le tissu étalé.

Ce procédé présente de nombreux avantages, notamment celui de permettre une correction progressive du placement en partant d'une extrémité longitudinale du tissu. La coupe du tissu est alors effectuée, en partant de cette extrémité, au fur et à mesure du contrôle. Il en résulte que cette invention peut être mise en oeuvre avec une installation de coupe automatique dans laquelle la table de coupe a une longueur réduite, ce qui permet, par rapport à l'art antérieur, d'éliminer la nécessité de recourir à des installations spécifiques pour la coupe de tissus à motif.

En pratique, le procédé décrit dans le document EP 0,759,708 prévoit de repositionner les pièces en cas de détection d'un décalage éventuel entre un point de référence mémorisé du tissu et un point caractéristique de motif le plus proche sur le tissu étalé sur la table de coupe.

Cependant, à l'issue de cette modification du placement théorique, les pièces qui sont repositionnées ne le sont pas toutes de la même valeur, de sorte qu'il existe un risque non négligeable que ces déplacements de pièces entraînent des chevauchements entre les pièces (c'est-à-dire des pièces qui se superposent au moins partiellement). Or, le chevauchement entre les pièces peut entraîner un défaut dans la qualité de coupe.

On connaît également des documents EP 0,518,473 et EP 2,328,729 des solutions différentes pour résoudre le problème de la non-coïncidence entre le modèle de tissu à motif utilisé pour le placement et le tissu réellement étalé sur la table de coupe. Dans ces documents, il est ainsi prévu de définir des régions de bordure englobant chaque pièce à découper et à l'intérieur desquelles on peut opérer des corrections de placement de la pièce en cas de détection de non coïncidence entre le modèle de tissu et le tissu étalé. En pratique, les dimensions de ces régions de bordure sont directement proportionnelles au pas théorique du motif du tissu. Ainsi, il est prévu d'augmenter les dimensions de la taille d'un demi pas du motif dans le document EP 0,518,473, et d'un pas entier dans le document EP 2,328,729.

Ces solutions ne sont cependant pas satisfaisantes. En effet, lorsque le pas théorique du motif du tissu est important (par exemple de l'ordre de plusieurs dizaines de centimètres), ces solutions conduisent à générer des espacements entre les pièces extrêmement importants, ce qui nuit à l'efficience du placement théorique des pièces et augmente considérablement les pertes.

Exposé de l'invention

La présente invention a donc pour but de proposer un procédé de placement de pièces destinées à être découpées de façon automatique qui ne présente pas les inconvénients précités.

Conformément à l'invention, ce but est atteint grâce à un procédé de placement de pièces destinées à être découpées de façon automatique dans un tissu à motif se répétant selon un pas prédéterminé, dit pas du motif, le procédé comprenant les étapes de :

a- détermination d'une liste de pièces à placer sur le tissu ;

b- pour au moins une pièce du placement, calcul d'un contour à placer autour de la pièce, le contour comprenant une marge variable afin d'éviter un chevauchement entre pièces adjacentes, la marge étant fonction d'un taux prédéfini de variation du tissu et d'au moins une contrainte prédéterminée de placement de la pièce sur le tissu ; et

c- élaboration d'un placement théorique des pièces sur le tissu prenant en compte le contour à placer de chaque pièce.

Le procédé selon l'invention est remarquable en ce qu'il prévoit de calculer un contour à placer englobant chaque pièce en fonction de plusieurs paramètres, à savoir le taux de variation du tissu (qui correspond à un pourcentage d'allongement du motif du tissu) et une ou plusieurs contraintes prédéterminées de placement de la pièce sur le tissu. Ainsi, plutôt que d'appliquer de manière arbitraire une marge d'espacement correspondant à un pourcentage du pas théorique du motif du tissu, le procédé selon l'invention permet d'appliquer une marge variable prenant en compte les particularités de placement des pièces sur le tissu, cette marge variable étant en tout point de la pièce la somme d'une marge d'espacement et d'une marge de positionnement. Il en résulte une gestion du risque de chevauchement des pièces qui permet de limiter fortement les pertes d'efficience du placement théorique des pièces.

De façon avantageuse, on associe à chaque pièce un contour initial représenté par un polygone, un point de référence, et au moins une contrainte de placement de la pièce sur le tissu choisie parmi :

- contrainte absolue pour laquelle la position du point de référence de la pièce par rapport au motif du tissu est déterminée pour qu'un motif du tissu apparaisse en un endroit désiré de la pièce ;

- contrainte relative pour laquelle la position du point de référence de la pièce, appelée pièce enfant, est déterminée par rapport à un point de liaison d'une autre pièce, appelée pièce parent, de manière à ce que la position du point de référence de la pièce enfant par rapport au motif du tissu soit la même que la position du point de liaison de la pièce parent ; et

- contrainte libre pour laquelle la position du point de référence de la pièce par rapport au motif du tissu est libre.

Selon un mode de réalisation, le calcul du contour à placer comprend, pour chaque pièce, une étape de calcul d'une marge d'espacement à appliquer au contour initial de la pièce afin d'obtenir un contour d'espacement de la pièce, suivie d'une étape de calcul d'une marge de positionnement à appliquer au contour d'espacement de la pièce afin d'obtenir le contour à placer de la pièce.

Dans ce mode de réalisation, la marge d'espacement d'une pièce peut être avantageusement calculée selon une direction de trame et une direction de chaîne du tissu et pour chaque arête du polygone représentant le contour initial de la pièce, la marge d'espacement d'une arête étant égale, pour chaque direction du tissu, au produit entre le taux de variation du tissu et un vecteur entre des points de l'arête et le point de référence de la pièce.

De plus, la marge de positionnement d'une pièce à laquelle est associée une contrainte absolue ou une contrainte libre est de préférence nulle.

De même, la marge de positionnement d'une pièce enfant à laquelle est associée une contrainte relative est avantageusement calculée selon une direction de trame et une direction de chaîne du tissu et est égale, pour chaque direction du tissu, au produit entre le taux de variation du tissu et un vecteur de liaison de la pièce, le vecteur de liaison étant la somme des vecteurs pièce de toutes les pièces parents d'une chaîne de liaison associée à la pièce enfant, le vecteur pièce d'une pièce parent étant défini entre son point de référence et son point de liaison.

Selon un autre mode de réalisation, le calcul du contour à placer comprend, pour chaque pièce, une étape de calcul d'une marge de positionnement à appliquer au contour initial de la pièce afin d'obtenir un contour de positionnement de la pièce, suivie d'une étape de calcul d'une marge d'espacement à appliquer au contour de positionnement de la pièce afin d'obtenir le contour à placer de la pièce.

Dans cet autre mode de réalisation, les marges d'espacement et de positionnement sont avantageusement calculées de la même façon que pour l'autre mode de réalisation.

Brève description des dessins

[Fig. 1] La figure 1 est une vue schématique d'un exemple de tissu à motifs répétitifs auquel s'applique l'invention.

[Fig. 2] La figure 2 est une vue illustrant de façon schématique différents types de pièces à placer sur le tissu de la figure 1.

[Fig. 3] La figure 3 est un ordinogramme schématisant les différentes étapes du procédé de placement selon un mode de réalisation de l'invention.

[Fig. 4] La figure 4 est un ordinogramme schématisant les différentes étapes du procédé de placement selon un autre mode de réalisation de l'invention.

[Fig. 5] La figure 5 est un ordinogramme schématisant les différentes étapes d'un exemple de calcul de la marge de positionnement du procédé de placement selon l'invention.

[Fig. 6] La figure 6 est un ordinogramme schématisant les différentes étapes d'un exemple de calcul de la marge d'espacement du procédé de placement selon l'invention.

[Fig. 7] [Fig. 8] [Fig. 9] [Fig. 10] [Fig. 11] [Fig. 12] et [Fig. 13] Les figures 7 à 13 illustrent différentes étapes d'un exemple de mise en oeuvre du procédé de placement selon l'invention à un groupe de pièces à placer.

Description des modes de réalisation

L'invention concerne la création d'un placement d'un groupe de pièces destinées à être découpées dans un tissu à motifs répétitifs, par exemple au moyen d'une installation de coupe automatique telle que celle décrite dans la publication EP 0,759,708.

Préalablement à la création du placement des pièces, il est nécessaire de caractériser le tissu dans lequel les pièces seront découpées. Cette étape peut être réalisée en prenant des mesures manuelles sur le tissu, en se basant sur les informations fournies par le fabricant ou en scannant une bande de matière pour reconnaître automatiquement le motif et le caractériser ; nombre de grilles, pas en chaîne, pas en trame, décalages, etc.

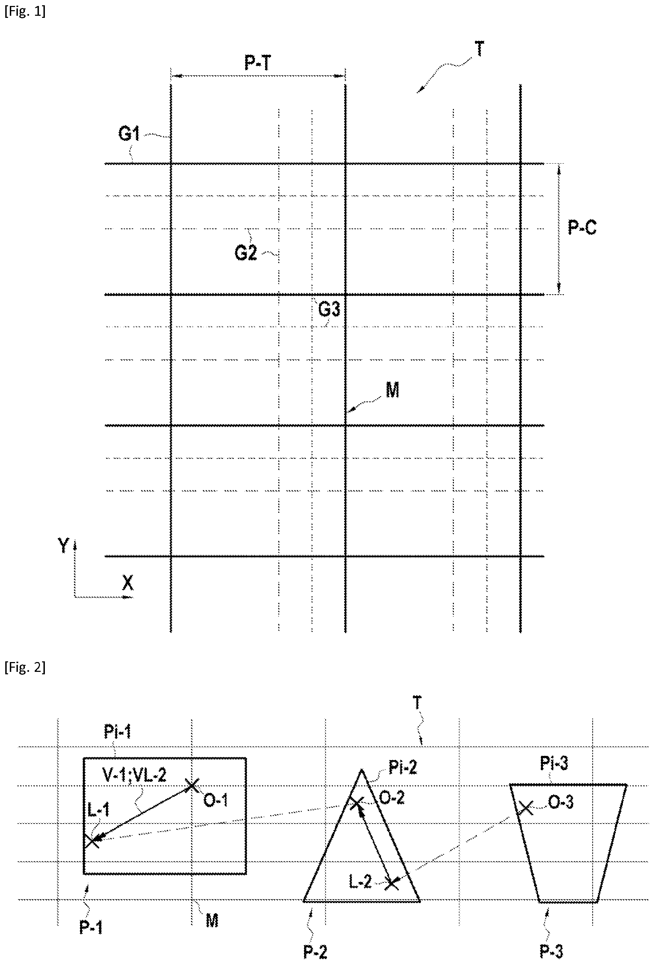

Un exemple de tissu à motifs répétitifs auquel s'applique l'invention est représenté sur la figure 1.

Sur cette figure 1 est représenté un tissu T à motifs répétitifs M présentant une grille principale G1 et deux grilles secondaires G2, G3, ces grilles G1 à G3 ayant des décalages en sens trame et en sens chaîne les unes par rapport aux autres (le sens chaîne étant schématisé par l'axe X et le sens trame par l'axe Y). Les motifs M se caractérisent notamment par leur pas en chaîne P-C et leur pas en trame P-T.

Les informations extraites de la caractérisation du tissu T sont ensuite utilisées pour créer le placement théorique des pièces.

L'opération de placement théorique consiste à déterminer les emplacements des pièces à couper. Le placement est réalisé de manière à minimiser les pertes de matière, tout en respectant certaines contraintes (respect du droit fil, espacement minimum entre les pièces à couper, etc.).

Dans le cas d'un tissu à motifs répétitifs, des impératifs esthétiques peuvent imposer, d'une part, pour certaines pièces, la présence d'un motif complet en un endroit particulier de la pièce, d'autre part, pour deux pièces destinées à être assemblées, une coupe de ces pièces assurant par exemple la continuité du motif après assemblage.

A cet effet, l'étape suivante du procédé de placement consiste à caractériser chaque pièce du placement en lui attribuant un contour initial, un point de référence, et au moins une contrainte de placement.

La figure 2 représente un exemple de trois pièces à placer P-1 à P-3 sur le tissu T à motifs M. A chacune de ces pièces est attribué un contour initial, respectivement Ci-1, Ci-2 et Ci-3.

Ces contours initiaux sont typiquement définis par un logiciel de conception assisté par ordinateur (CAO) sans aucune marge. Ils sont représentés par un polygone ; à savoir un rectangle pour la pièce P-1, un triangle pour la pièce P-2 et un trapèze pour la pièce P-3.

A chaque pièce du placement P-1 à P-2 est associée un point de référence, respectivement O-1, O-2 et 0-3, et au moins une contrainte de placement de la pièce sur le tissu.

Le point de référence de chaque pièce est définit par l'opérateur quelle que soit la contrainte de placement utilisée. Il s'agit d'un point sur la pièce qui est important à positionner.

La contrainte de placement est choisie par l'opérateur parmi l'une des contraintes de placement suivantes :

1/ contrainte absolue :
Cette contrainte est associée à une pièce qui doit être positionnée sur le tissu à un endroit précis pour qu'un motif du tissu apparaisse en un endroit désiré de la pièce.

Pour cette contrainte, la position du point de référence de la pièce par rapport au motif du tissu est prédéterminée.

Sur l'exemple de la figure 2, seule la pièce P-2 est associée à une contrainte de placement absolue.

2/ contrainte relative :

Cette contrainte est associée à une première pièce, appelée « pièce enfant », dont la position sur le tissu est déterminée en fonction de la position d'une seconde pièce, appelée « pièce parent ». Pour cette contrainte, la position du point de référence de la pièce enfant, est déterminée par rapport à un point de liaison L de la pièce parent de manière à ce que la position du point de référence de la pièce enfant par rapport au motif du tissu soit la même que la position du point de liaison de la pièce parent.

Sur l'exemple de la figure 2, la pièce P-1 est la pièce parent de la pièce P-2 (pièce enfant) de sorte que la pièce P-1 a un point de liaison L-1 qui permet de positionner le point de référence O-2 de la pièce P-2. De même, la pièce P-2 est la pièce parent de la pièce P-3 (pièce enfant) de sorte que la pièce P-2 a un point de liaison L-2 qui permet de positionner le point de référence O-3 de la pièce P-3. En revanche, la pièce P-1 est une pièce sans parent et la pièce P-3 est une pièce sans enfant.

A chaque pièce parent, on attribue au moins un vecteur pièce qui est défini entre son point de référence et son point de liaison (voir sur la figure 2 le vecteur pièce V-1 de la pièce P-1 défini entre les points O-1 et L-1, et le vecteur pièce V-2 de la pièce P-2 défini entre les points O-2 et L-2).

Il est à noter qu'une même pièce peut contenir plusieurs vecteurs pièces du fait qu'elle peut être le parent de plusieurs pièces enfants.

A chaque pièce enfant, on définit un vecteur de liaison qui est la somme des vecteurs pièces de toutes les pièces parents dans la chaîne de liaison associée à la pièce enfant. Sur l'exemple de la figure 2, le vecteur de liaison VL-2 de la pièce enfant P-2 est égal au vecteur pièce V-1 de la pièce P-1 (la pièce P-1 est pièce parent pour la pièce P-2). De même, le vecteur de liaison VL-3 de la pièce P-3 (non représentée) est égale à la somme du vecteur pièce V-2 de la pièce P-2 (P-2, parent de P-3) et du vecteur pièce V-1 de la pièce P-1 (P-1, parent de P-2).

Il est à noter qu'une pièce sans parent a un vecteur de liaison qui est nul.

5

3/ contrainte libre :

Cette contrainte est associée à une pièce dont la position par rapport au motif du tissu est libre (i.e. absence de contrainte relative ou absolue). Pour cette contrainte, la position du point de référence de la pièce par rapport au motif du tissu est libre.

Une fois déterminées et enregistrées les informations relatives aux caractéristiques du tissu et aux différentes pièces du placement, le placement des pièces est calculé.

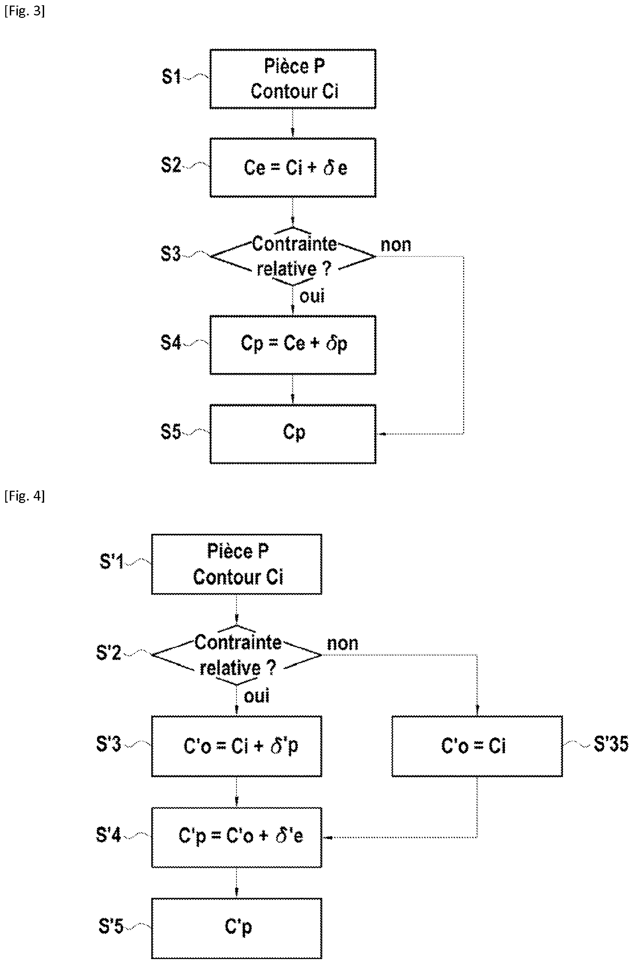

La figure 3 représente un ordinogramme des étapes du procédé de placement selon un mode de réalisation de l'invention.

Chaque pièce P du placement est traitée individuellement. A partir du contour initial Ci associée à la pièce (étape S1), on calcule d'abord une marge d'espacement δe à appliquer au contour initial de la pièce afin d'obtenir un contour d'espacement Ce de la pièce (étape S2). Ce calcul de marge d'espacement est indépendant de la contrainte de placement associée à la pièce.

Ensuite, si la contrainte de placement associée à la pièce P est une contrainte relative (étape S3), on calcule une marge de positionnement δp à appliquer au contour d'espacement Ce de la pièce précédemment calculé (étape S4) afin d'obtenir le contour à placer Cp de la pièce (étape S5).

Si aucune contrainte relative n'est associée à la pièce, le contour à placer Cp de la pièce est le contour d'espacement Ce calculé à l'étape S2.

Une fois le contour d'espacement obtenu pour la pièce, on passe à la pièce suivante du placement jusqu'à calculer le contour à placer de l'ensemble des pièces du placement.

L'étape suivante du procédé (non représentée sur la figure 3) consiste alors à élaborer un placement théorique des pièces sur le tissu qui prend en compte le contour à placer Cp de chaque pièce. De façon connue en soi, le placement théorique est réalisé de manière à minimiser les pertes de matière, tout en respectant certaines contraintes (respect du droit fil, espacement minimum entre les pièces à couper, ...).

La figure 4 représente un ordinogramme des étapes du procédé de placement selon un autre mode de réalisation de l'invention.

Chaque pièce P du placement est également traitée individuellement. A partir du contour initial Ci associée à la pièce (étape S'1), on détermine d'abord si une contrainte relative est associée à la pièce (étape S'2). Si cela est le cas, on calcule d'abord une marge de positionnement δ'p à appliquer au contour initial Ci de la pièce afin d'obtenir un contour de positionnement C'o de la pièce (étape S'3).

Si aucune contrainte relative n'est associée à la pièce, le contour de positionnement C'o est égal au contour initial Ci (étape S'35).

Ensuite, on calcule une marge d'espacement δ'e à appliquer au contour de positionnement C'o de la pièce précédemment calculé (étape S'4) afin d'obtenir le contour à placer C'p de la pièce (étape S'5). Ce calcul de marge d'espacement est indépendant de la contrainte de placement associée à la pièce.

L'étape suivante du procédé (non représentée sur la figure 4) consiste alors à élaborer un placement théorique des pièces sur le tissu qui prend en compte le contour à placer C'p de chaque pièce.

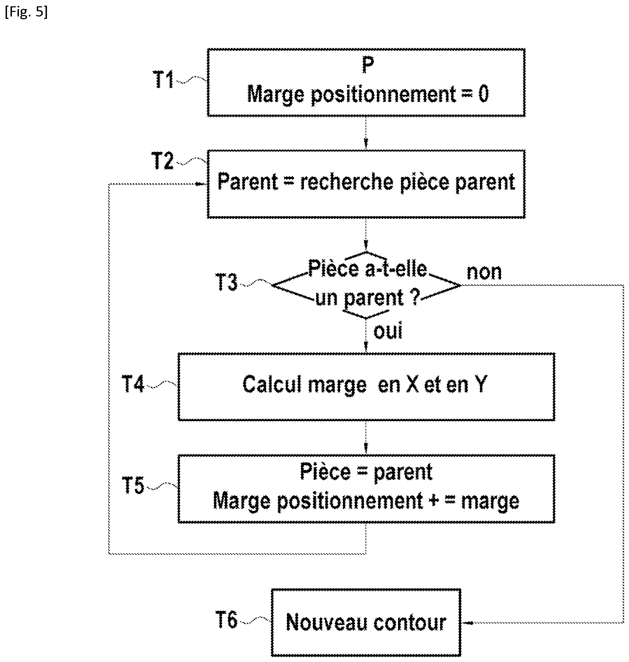

En liaison avec la figure 5, on décrira maintenant un exemple de calcul d'une marge de positionnement tel que décrit dans les procédés des figures 3 et 4.

En préambule, on rappellera que l'étape de calcul d'une marge de positionnement tel que décrit dans les procédés des figures 3 et 4 s'applique uniquement aux pièces auxquelles est associée une contrainte relative (la marge de positionnement d'une pièce à laquelle est associée une contrainte absolue ou une contrainte libre est nulle).

En préambule, le calcul de la marge de positionnement s'applique à une pièce P ayant un contour primaire (étape T1), ce contour primaire pouvant être le contour d'espacement Ce de la pièce calculé à l'étape S2 dans le cas du procédé illustré par la figure 3, ou le contour initial Ci de la pièce à l'étape S'1 dans le cas du procédé illustré par la figure 4.

La première étape consiste à rechercher la pièce parent de la pièce P en question parmi l'ensemble des pièces du placement (étape T2).

Si la pièce en question est une pièce enfant liée à une pièce parent (étape T3), on calcule alors la marge de positionnement de la pièce (étape T4) selon le calcul détaillé ci-après.

Pour chaque direction du tissu (sens chaîne X et sens trame Y), la marge de positionnement est donnée par le produit entre le taux de variation du tissu et le vecteur pièce de la pièce parent, ce qui donne :

$$\text{Marge positionnement X} = [\text{Taux variation du tissu en X}] * [\text{Vecteur pièce en X}]$$

$$\text{Marge positionnement Y} = [\text{Taux variation du tissu en Y}] * [\text{Vecteur pièce en Y}]$$

La pièce en question devient ensuite son parent (étape T5) de sorte qu'on réitère les étapes T2 à T4 pour le « parent du parent ».

Cette fonction récursive s'apparente ainsi à calculer la marge de positionnement comme étant le produit entre le taux de variation du tissu et le vecteur liaison de la pièce (le vecteur liaison étant, comme indiqué précédemment, la somme des vecteurs pièce de toutes les pièces parents de la chaîne de liaison associée à la pièce en question).

A l'issue de l'étape finale (étape T6), on détermine alors le nouveau contour de la pièce en appliquant les marges de positionnement (en valeur absolue) selon les directions X, Y au contour primaire de la pièce.

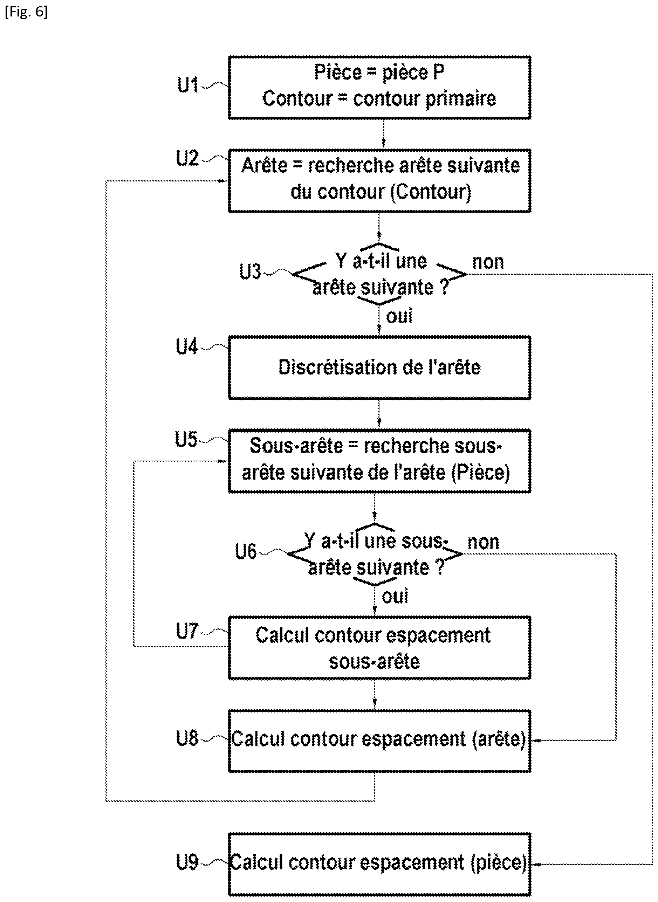

En liaison avec la figure 6, on décrira maintenant un exemple de calcul d'une marge d'espacement tel que décrit dans les procédés des figures 3 et 4.

En préambule, le calcul de la marge d'espacement s'applique à une pièce P ayant un contour primaire (étape U1), ce contour primaire pouvant être le contour initial Ci de la pièce à l'étape S1 dans le cas du procédé illustré par la figure 3, ou le contour de positionnement C'o de la pièce calculé à l'étape S'3 dans le cas du procédé illustré par la figure 4.

L'étape suivante consiste à diviser le contour primaire de la pièce en une pluralité d'arêtes (ou segments) du polygone correspondant au contour (étape U2), chaque arête du polygone étant traitée.

S'il existe une telle arête (étape U3), celle-ci est discrétisée pour obtenir une pluralité de sous-arêtes (étape U4).

Aussi, l'étape suivante U5, U6 consiste à vérifier si pour une arête donnée, il existe une sous-arête. Dans l'affirmative, le calcul de la marge d'espacement pour cette sous-arête est réalisée à l'étape U7 et est égale, pour chaque direction du tissu et pour chaque point d'extrémité de la sous-arête, au produit entre le taux de variation du tissu et le vecteur entre le point d'extrémité correspondant de la sous-arête et le point de référence de la pièce, ce qui donne :

$$\text{Marge espacement X} = [\text{Taux variation du tissu en X}] * [\text{Vecteur point extrémité sous-arête en X}]$$

$$\text{Marge espacement Y} = [\text{Taux variation du tissu en Y}] * [\text{Vecteur point extrémité sous-arête en Y}]$$

On obtient alors pour les points d'extrémité de la sous-arête des rectangles centrés sur ces points dont les dimensions en X et en Y sont respectivement la marge d'espacement X et la marge d'espacement Y calculées pour chacun de ces points d'extrémité. Le contour d'espacement de la sous-arête est obtenu en calculant l'enveloppe convexe des points de ces deux rectangles (étape U8). Ce calcul peut par exemple être réalisé en utilisant l'algorithme d'Andrew bien connu en soi.

Ensuite il est prévu une réitération de l'étape U7 pour la sous-arête suivante. S'il n'existe plus de sous-arête (c'est-à-dire que toutes les sous-arêtes de l'arête ont été traitées), l'étape suivante consiste à calculer le contour d'espacement de l'arête résultant de l'union de tous les contours d'espacement des sous-arêtes.

Les étapes U2 à U8 sont alors réitérées pour toutes les arêtes du contour primaire de la pièce.

A la fin du calcul du contour d'espacement de chaque arête du contour primaire de la pièce, on calcule le contour d'espacement de la pièce (étape U9)résultant de l'union de tous les contours d'espacement calculés pour toutes les arêtes de la pièce.

On notera que dans les calculs des marges d'espacement et de positionnement détaillés en liaison avec les figures 5 et 6, le taux de variation du tissu est égal, pour chaque direction du tissu, à un pourcentage d'allongement du motif du tissu dans ladite direction.

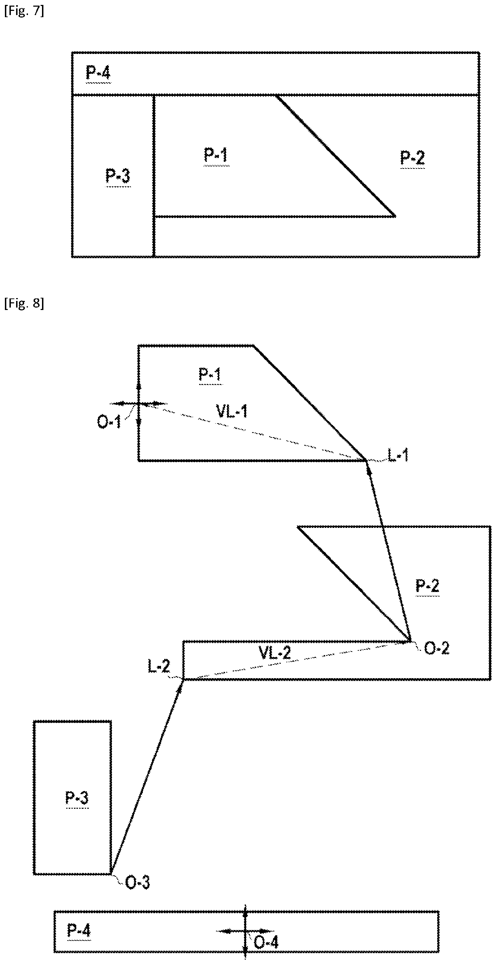

En liaison avec les figures 7 à 13, on décrira maintenant un exemple d'application du procédé de placement tel que décrit dans l'ordinogramme de la figure 3.

Dans cet exemple, le groupe de pièces du placement comprend quatre pièces P-1 à P-4 assemblées pour former un rectangle (voir la figure 7), dont :

- une pièce P-1 ayant une contrainte de placement absolue,

- deux pièces P-2 et P-3 ayant des contraintes de placement relatives qui forment une chaîne de liaison, à savoir : la pièce P-1 est la pièce parent de la pièce enfant P-2, et la pièce P-2 est la pièce parent de la pièce enfant P-3,

- une pièce P-4 ayant une contrainte de placement libre.

Toujours dans cet exemple, le tissu dans lequel le placement est calculé présente un taux de variation de 2% sur l'axe X (sens chaîne, noté Wx) et de 1% sur l'axe Y (sens trame, noté Wy).

La figure 8 représente les différentes données relatives aux pièces P-1 à P-4 dans le système de coordonnées (0, X, Y), le point 0 étant par exemple défini comme étant situé dans un coin d'un rectangle englobant chaque pièce.

Pour la pièce P-1 (pièce parent de P-2), celle-ci présente :

- un point de référence O-1 dont les coordonnées sont : (0, 75)

- un point de liaison L-1 dont les coordonnées sont : (300, 0)

- un vecteur de liaison VL-1 dont les coordonnées sont : (-300, 75)

Pour la pièce P-2 (pièce enfant de P-1 et pièce parent de P-3), celle-ci présente :

- un point de référence O-2 dont les coordonnées sont : (300, 50)

- un point de liaison L-2 dont les coordonnées sont : (0, 0)

- un vecteur de liaison VL-2 dont les coordonnées sont : (300, 50)

Pour la pièce P-3 (pièce enfant de P-2), celle-ci présente :

- un point de référence O-3 dont les coordonnées sont : (100, 0)

Pour la pièce P-4, celle-ci présente :

- un point de référence O-4 dont les coordonnées sont : (250, 25)

Dans le procédé décrit en liaison avec l'ordinogramme de la figure 3, il est d'abord procédé au calcul de la marge d'espacement du contour initial de chaque pièce du placement.

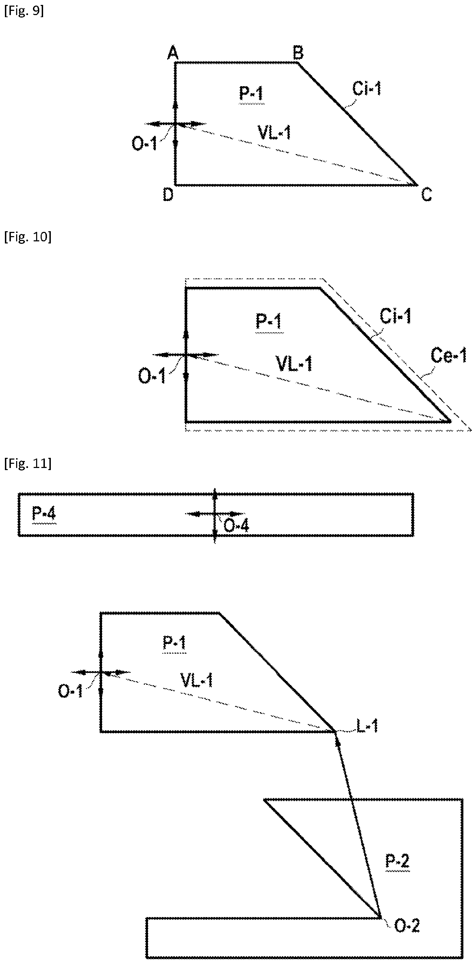

La figure 9 illustre la façon dont un tel calcul est opéré pour la pièce P-1.

En particulier, comme détaillé précédemment en liaison avec la figure 6, le calcul de la marge d'espacement du polygone (ABCD) correspondant au contour initial Ci-1 de la pièce P-1 est réalisé par l'union de toutes les enveloppes convexes calculées pour toutes les arêtes du polygone de la pièce, à savoir les arêtes : (A, B), (B, C), (C, D), et (D, A).

Si l'on prend l'exemple de l'arête (B, C), il est d'abord procédé à une discrétisation de cette arête en sous-arêtes ayant par exemple chacune une longueur de 5mm, ce qui donne 212mm/5mm = 43 sous-arêtes notées ssi (ss1, ss2, ss3, ..., ss43). Chaque sous-arête ssi possède deux extrémités notées pt1 et pt2.

Pour chaque sous-arête ssi, la marge d'espacement est alors donnée par le calcul suivant (au point pt1) :

$$\text{Marge espacement } X = [(ssi \text{ en } X) * (pt1 \text{ en } X) - (O\text{-}1 \text{ en } X)] * (Wx) * 2$$

$$\text{Marge espacement } Y = [(ssi \text{ en } Y) * (pt1 \text{ en } Y) - (O\text{-}1 \text{ en } Y)] * (Wy) * 2$$

Si l'on prend comme coordonnées pour pt1 (150, 150), le calcul de la marge d'espacement donne pour ce point :

$$\text{Marge espacement } X = [150-0] * 0.02 * 2 = 6 \text{ mm}$$

$$\text{Marge espacement } Y = [150-75] * 0.01 * 2 = 1.50 \text{ mm}$$

Si l'on prend comme coordonnées pour pt2 (153.50, 146.50), le calcul de la marge d'espacement donne pour ce point :

$$\text{Marge espacement } X = [153.50-0] * 0.02 * 2 = 6.14 \text{ mm}$$

$$\text{Marge espacement } Y = [146.50\text{-}75] * 0.01 * 2 = 1.43 \text{ mm}$$

On obtient alors pour les points pt1 et pt2 de la sous-arête ssi des rectangles centrés sur ces points dont les dimensions en X et en Y sont respectivement la marge d'espacement X et la marge d'espacement Y calculées pour chacun de ces points. Le contour d'espacement de la sous-arête est obtenu en calculant l'enveloppe convexe des points de ces deux rectangles. Ce calcul est réitéré pour chaque sous-arête ssi de l'arête (B, C) du polygone de la pièce P-1. Le contour d'espacement de l'arête (B, C) est obtenu en calculant le contour englobant de l'union de tous les contours d'espacement des sous-arêtes ssi.

Après avoir calculé le contour d'espacement pour chaque arête du polygone, on obtient alors le contour d'espacement Ce-1 représenté sur la figure 10 en calculant le contour résultant de l'union des contours d'espacement de chaque arête..

On notera ici que dans le sens chaîne (direction X), il n'y a aucune marge d'espacement au niveau du point de référence O-1 et que plus on s'éloigne de ce point de référence, plus la marge d'espacement augmente. De même, dans le sens trame (direction Y), la marge d'espacement est la même en haut et en bas (ce qui est cohérent avec le fait que le point de référence O-1 est situé à équidistance du haut et du bas de la pièce).

L'étape suivante du procédé de placement tel que décrit dans l'ordinogramme de la figure 3 consiste à calculer la marge de positionnement appliquée à chaque pièce P-1 à P-4 à partir du contour d'espacement précédemment calculé.

Comme indiqué précédemment, la marge de positionnement est nulle pour les pièces ayant une contrainte de placement absolue et pour les pièces ayant une contrainte de placement libre, à savoir ici les pièces P-1 et P-4.

Dans l'exemple illustré sur la figure 11, on s'intéressera d'abord au calcul de la marge de positionnement de la pièce P-2.

Cette marge de positionnement est calculée en faisant la somme des vecteurs de liaison des pièces parents. En l'espèce, le parent de la pièce enfant P-2 est la pièce P-1 et cette dernière n'a pas de parent.

Ainsi, le calcul de la marge de positionnement pour la pièce P-2 est le suivant :

$$\text{Marge positionnement } X = (VL\text{-}1 \text{ en } X) * Wx = (\text{-}300) * 0.02 = \text{-}6 \text{ mm}$$

$$\text{Marge positionnement } Y = (VL\text{-}1 \text{ en } Y) * Wy = 75 * 0.01 = 0.75 \text{ mm}$$

Le contour de la pièce P-2 est alors margé de 6 mm dans le sens chaîne (direction X) et de 0.75 mm dans le sens trame (direction Y). On notera que l'on prend les marges en valeur absolue.

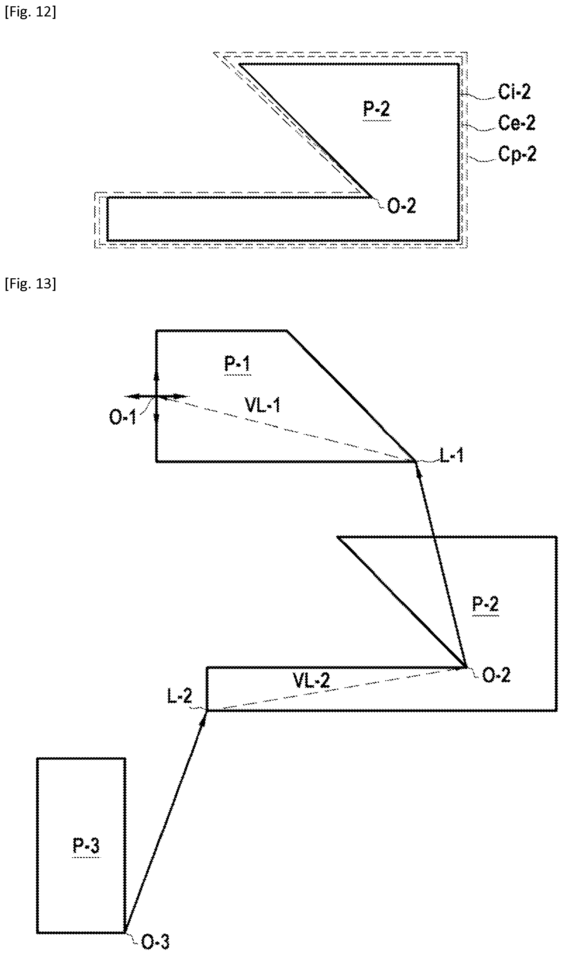

La figure 12 représente l'application des marges d'espacement et de positionnement ainsi calculées à la pièce P-2 avec son contour initial Ci-2, son contour d'espacement Ce-2, et son contour à placer Cp-2.

Dans l'exemple illustré sur la figure 13, on s'intéressera au calcul de la marge de positionnement de la pièce P-3.

Cette marge de positionnement est calculée en faisant la somme des vecteurs de liaison des pièces parents. En l'espèce, le parent de la pièce enfant P-3 est la pièce P-2 et le parent de la pièce P-2 est la pièce P-1, cette dernière n'a pas de parent.

Ainsi, le calcul de la marge de positionnement pour la pièce P-3 est le suivant :

$$\text{Marge positionnement } X = (VL\text{-}2 \text{ en } X + VL\text{-}1 \text{ en } X) * Wx$$

$$\text{Marge positionnement } X = (300 - 300\ ) * 0.02 = 0 \text{ mm}$$

$$\text{Marge positionnement } Y = (VL\text{-}2 \text{ en } Y + VL\text{-}1 \text{ en } Y) * Wy$$

$$\text{Marge positionnement } Y = (75 + 50) * 0.01 = 1.25 \text{ mm}$$

Sur cet exemple, il y a une marge de positionnement qui est nulle dans la direction X

**Revendications**

1. Procédé de placement de pièces (P-1 à P-4) destinées à être découpées de façon automatique dans un tissu (T) à motif (M) se répétant selon un pas prédéterminé, dit pas du motif, le procédé comprenant une étape de :

   a- détermination d'une liste de pièces à placer sur le tissu ;

   , **caractérisé par** les étapes de:

   b- pour au moins une pièce du placement, calcul d'un contour à placer (Cp) autour de la pièce, le contour comprenant une marge variable afin d'éviter un chevauchement entre pièces adjacentes, la marge étant fonction d'un taux prédéfini de variation du tissu et d'au moins une contrainte prédéterminée de placement de la pièce sur le tissu ; et
   c- élaboration d'un placement théorique des pièces sur le tissu prenant en compte le contour à placer de chaque pièce.

2. Procédé selon la revendication 1, dans lequel on associe à chaque pièce un contour initial (CI) représenté par un polygone, un point de référence (O-1 à 0-4), et au moins une contrainte de placement de la pièce sur le tissu choisie parmi :

   - contrainte absolue pour laquelle la position du point de référence de la pièce par rapport au motif du tissu est déterminée pour qu'un motif du tissu apparaisse en un endroit désiré de la pièce ;
   - contrainte relative pour laquelle la position du point de référence de la pièce, appelée pièce enfant, est déterminée par rapport à un point de liaison (L-1, L-2) d'une autre pièce, appelée pièce parent, de manière à ce que la position du point de référence de la pièce enfant par rapport au motif du tissu soit la même que la position du point de liaison de la pièce parent ; et
   - contrainte libre pour laquelle la position du point de référence de la pièce par rapport au motif du tissu est libre.

3. Procédé selon la revendication 2, dans lequel le calcul du contour à placer comprend, pour chaque pièce, une étape de calcul d'une marge d'espacement à appliquer au contour initial de la pièce afin d'obtenir un contour d'espacement de la pièce, suivie d'une étape de calcul d'une marge de positionnement à appliquer au contour d'espacement de la pièce afin d'obtenir le contour à placer de la pièce.

4. Procédé selon la revendication 3, dans lequel la marge d'espacement d'une pièce est calculée selon une direction de trame et une direction de chaîne du tissu et pour chaque arête du polygone représentant le contour initial de la pièce, la marge d'espacement d'une arête étant égale, pour chaque direction du tissu, au produit entre le taux de variation du tissu et un vecteur entre des points de l'arête et le point de référence de la pièce.

5. Procédé selon l'une des revendications 3 et 4, dans lequel la marge de positionnement d'une pièce à laquelle est associée une contrainte absolue ou une contrainte libre est nulle.

6. Procédé selon l'une quelconque des revendications 3 à 5, dans lequel la marge de positionnement d'une pièce enfant à laquelle est associée une contrainte relative est calculée selon une direction de trame et une direction de chaîne du tissu et est égale, pour chaque direction du tissu, au produit entre le taux de variation du tissu et un vecteur de liaison de la pièce, le vecteur de liaison étant la somme des vecteurs pièce de toutes les pièces parents d'une chaîne de liaison associée à la pièce enfant, le vecteur pièce d'une pièce parent étant défini entre son point de référence et son point de liaison.

7. Procédé selon la revendication 2, dans lequel le calcul du contour à placer comprend, pour chaque pièce, une étape de calcul d'une marge de positionnement à appliquer au contour initial de la pièce afin d'obtenir un contour de positionnement de la pièce, suivie d'une étape de calcul d'une marge d'espacement à appliquer au contour de positionnement de la pièce afin d'obtenir le contour à placer de la pièce.

8. Procédé selon la revendication 7, dans lequel la marge de positionnement d'une pièce à laquelle est associée une contrainte absolue ou une contrainte libre est nulle.

9. Procédé selon l'une des revendications 7 et 8, dans lequel la marge de positionnement d'une pièce enfant à laquelle est associée une contrainte relative est calculée selon une direction de trame et une direction de chaîne du tissu et est égale, pour chaque direction du tissu, au produit entre le taux de variation du tissu et un vecteur de liaison de la pièce, le vecteur de liaison étant la somme des vecteurs pièce de toutes les pièces parents d'une chaîne de liaison associée à la pièce enfant, le vecteur pièce d'une pièce parent étant défini entre son point de référence et son point de liaison

10. Procédé selon l'une quelconque des revendications 7 à 9, dans lequel la marge d'espacement d'une pièce est calculée selon une direction de trame et une direction de chaîne du tissu et pour chaque arête du polygone représentant le contour initial de la pièce, la marge d'espacement d'une arête étant égale, pour chaque direction du tissu, au produit entre le taux de variation du tissu et un vecteur entre des points de l'arête et le point de référence de la pièce

11. Procédé selon l'une quelconque des revendications 4 à 6, 9 et 10, dans lequel le taux de variation du tissu est égal, pour chaque direction du tissu, à un pourcentage d'allongement du motif du tissu dans ladite direction.

**Patentansprüche**

1. Verfahren zum Auslegen von automatisch zu schneidenden Teilen (P-1 bis P-4) in Gewebe (T) mit einem Muster (M), das sich nach einer vorgegebenen Folge wiederholt, die als Musterfolge bezeichnet wird, wobei das Verfahren einen Schritt umfasst des:

   a- Bestimmens einer Liste von Teilen, die auf dem Gewebe auszulegen sind,

   **gekennzeichnet durch** die Schritte des:

   b- für mindestens ein Auslegungsteil, Berechnens einer Auslegungskontur (Cp) um das Teil herum, wobei die Kontur eine variable Spanne umfasst, um eine Überlappung zwischen benachbarten Teilen zu verhindern, wobei die Spanne von einer vordefinierten Änderungsrate des Gewebes und von mindestens einer vorbestimmten Auslegungsbeschränkung des Teils auf dem Gewebe abhängig ist, und
   c- Ausarbeitens einer theoretischen Auslegung von Teilen auf dem Gewebe unter Berücksichtigung der Auslegungskontur jedes Teils.

2. Verfahren nach Anspruch 1, wobei jedem Teil eine Anfangskontur (CI), die durch ein Polygon dargestellt ist, ein Bezugspunkt (O-1 bis O-4) und mindestens eine Auslegungsbeschränkung des Teils auf dem Gewebe zugeordnet ist, die ausgewählt ist aus:

   - einer absoluten Beschränkung, für welche die Position des Bezugspunktes des Teils in Bezug auf das Muster des Gewebes bestimmt wird, sodass ein Muster des Gewebes an einer gewünschten Stelle des Teils erscheint,
   - einer relativen Beschränkung, für welche die Position des Bezugspunktes des Teils, das als untergeordnetes Teil bezeichnet wird, in Bezug auf einen Verbindungspunkt (L-1, L-2) eines weiteren Teils, das als übergeordnetes Teil bezeichnet wird, auf eine Weise bestimmt wird, dass die Position des Bezugspunktes des untergeordneten Teils in Bezug auf das Muster des Gewebes die gleiche wie die Position des Verbindungspunktes des übergeordneten Teils ist, und
   - einer freien Beschränkung, für welche die Position des Bezugspunktes des Teils in Bezug auf das Muster des Gewebes frei ist.

3. Verfahren nach Anspruch 2, wobei die Berechnung der auszulegenden Kontur für jedes Teil einen Schritt des Berechnens einer Zwischenraumspanne umfasst, die auf die Anfangskontur des Teils anzuwenden ist, um eine Zwischenraumkontur des Teils zu erhalten, gefolgt von einem Schritt des Berechnens einer Positionierungsspanne, die auf die Zwischenraumkontur des Teils anzuwenden ist, um die Kontur zum Auslegen des Teils zu erhalten.

4. Verfahren nach Anspruch 3, wobei die Zwischenraumspanne eines Teils gemäß einer Schussrichtung und einer Kettrichtung des Gewebes berechnet wird und für jede Kante des Polygons, das die Anfangskontur des Teils darstellt, die Zwischenraumspanne einer Kante für jede Richtung des Gewebes gleich dem Produkt zwischen der Änderungsrate des Gewebes und einem Vektor zwischen den Punkten der Kante und dem Bezugspunkt des Teils ist.

5. Verfahren nach einem der Ansprüche 3 und 4, wobei die Positionierungsspanne eines Teils, dem eine absolute Beschränkung oder eine freie Beschränkung zugeordnet ist, null ist.

**6.** Verfahren nach einem der Ansprüche 3 bis 5, wobei die Positionierungsspanne eines untergeordneten Teils, dem eine relative Beschränkung zugeordnet ist, gemäß einer Schussrichtung und einer Kettrichtung des Gewebes berechnet wird und für jede Richtung des Gewebes gleich dem Produkt zwischen der Änderungsrate des Gewebes und einem Verbindungsvektor des Teils ist, wobei der Verbindungsvektor die Summe der Teilevektoren aller übergeordneten Teile einer Verbindungskette ist, die dem untergeordneten Teil zugeordnet ist, wobei der Teilevektor eines übergeordneten Teils zwischen seinem Bezugspunkt und seinem Verbindungspunkt definiert ist.

**7.** Verfahren nach Anspruch 2, wobei die Berechnung der Auslegungskontur für jedes Teil einen Schritt des Berechnens einer Positionierungsspanne umfasst, die auf die Anfangskontur des Teils anzuwenden ist, um eine Positionierungskontur des Teils zu erhalten, gefolgt von einem Schritt des Berechnens einer Zwischenraumspanne, die auf die Positionierungskontur des Teils anzuwenden ist, um die Auslegungskontur des Teils zu erhalten.

**8.** Verfahren nach Anspruch 7, wobei die Positionierungsspanne eines Teils, dem eine absolute Beschränkung oder eine freie Beschränkung zugeordnet ist, null ist.

**9.** Verfahren nach einem der Ansprüche 7 und 8, wobei die Positionierungsspanne eines untergeordneten Teils, dem eine relative Beschränkung zugeordnet ist, gemäß einer Schussrichtung und einer Kettrichtung des Gewebes berechnet wird und für jede Richtung des Gewebes gleich dem Produkt zwischen der Änderungsrate des Gewebes und einem Verbindungsvektor des Teils ist, wobei der Verbindungsvektor die Summe der Teilevektoren aller übergeordneten Teile einer Verbindungskette ist, die dem untergeordneten Teil zugeordnet ist, wobei der Teilevektor eines übergeordneten Teils zwischen seinem Bezugspunkt und seinem Verbindungspunkt definiert ist.

**10.** Verfahren nach einem der Ansprüche 7 bis 9, wobei die Zwischenraumspanne eines Teils gemäß einer Schussrichtung und einer Kettrichtung des Gewebes berechnet wird und für jede Kante des Polygons, das die Anfangskontur des Teils darstellt, die Zwischenraumspanne einer Kante für jede Richtung des Gewebes gleich dem Produkt zwischen der Änderungsrate des Gewebes und einem Vektor zwischen den Punkten der Kante und dem Bezugspunkt des Teils ist.

**11.** Verfahren nach einem der Ansprüche 4 bis 6, 9 und 10, wobei die Änderungsrate des Gewebes für jede Richtung des Gewebes gleich einem Prozentsatz der Dehnung des Musters des Gewebes in der Richtung ist.


**Claims**

**1.** A method for placing pieces (P-1 to P-4) intended to be cut automatically from a fabric (T) having a pattern (M) that repeats at a predetermined pitch, called pattern pitch, the method comprising a step of:

  a- determining a list of pieces to be placed on the fabric;

**characterised by** the steps of:

  b- for at least one piece of the placement, calculating a contour to be placed (Cp) around the piece, the contour comprising a variable margin in order to avoid an overlap between adjacent pieces, the margin being a function of a predefined rate of variation of the fabric and of at least one predetermined constraint of placement of the piece on the fabric; and
  c- developing a theoretical placement of the pieces on the fabric taking into account the contour to be placed of each piece.

**2.** The method according to claim 1, wherein each piece is associated with an initial contour (CI) represented by a polygon, a reference point (O-1 to 0-4), and at least one constraint of placement of the piece on the fabric chosen among:

  - absolute constraint for which the position of the reference point of the piece relative to the fabric pattern is determined so that a fabric pattern appears at a desired location in the piece;
  - relative constraint for which the position of the reference point of the piece, called child piece, is determined relative to a link point (L-1, L-2) of another piece, called parent piece, so that the position of the reference point of the child piece relative to the fabric pattern is the same as the position of the link point of the parent piece; and
  - free constraint for which the position of the reference point of the piece relative to the fabric pattern is free.

3. The method according to claim 2, wherein the calculation of the contour to be placed comprises, for each piece, a step of calculating a spacing margin to be applied to the initial contour of the piece in order to obtain a spacing contour of the piece, followed by a step of calculating a positioning margin to be applied to the spacing contour of the piece in order to obtain the contour to be placed of the piece.

4. The method according to claim 3, wherein the spacing margin of a piece is calculated according to a weft direction and a warp direction of the fabric and for each edge of the polygon representing the initial contour of the piece, the spacing margin of an edge being equal, for each direction of the fabric, to the product between the rate of variation of the fabric and a vector between points of the edge and the reference point of the piece.

5. The method according to any of claims 3 and 4, wherein the positioning margin of a piece with which an absolute constraint or a free constraint is associated is zero.

6. The method according to any one of claims 3 to 5, wherein the positioning margin of a child piece with which a relative constraint is associated is calculated according to a weft direction and a warp direction of the fabric and is equal, for each direction of the fabric, to the product between the rate of variation of the fabric and a link vector of the piece, the link vector being the sum of the piece vectors of all the parent pieces of a link warp associated with the child piece, the piece vector of a parent piece being defined between its reference point and its link point.

7. The method according to claim 2, wherein the calculation of the contour to be placed comprises, for each piece, a step of calculating a positioning margin to be applied to the initial contour of the piece in order to obtain a positioning contour of the piece, followed by a step of calculating a spacing margin to be applied to the positioning contour of the piece in order to obtain the contour to be placed of the piece.

8. The method according to claim 7, wherein the positioning margin of a piece with which an absolute constraint or a free constraint is associated is zero.

9. The method according to any of claims 7 and 8, wherein the positioning margin of a child piece with which a relative constraint is associated is calculated according to a weft direction and a warp direction of the fabric and is equal, for each direction of the fabric, to the product between the rate of variation of the fabric and a link vector of the piece, the link vector being the sum of the piece vectors of all the parent pieces of a link warp associated with the child piece, the piece vector of a parent piece being defined between its reference point and its link point.

10. The method according to any one of claims 7 to 9, wherein the spacing margin of a piece is calculated according to a weft direction and a warp direction of the fabric and for each edge of the polygon representing the initial contour of the piece, the spacing margin of an edge being equal, for each direction of the fabric, to the product between the rate of variation of the fabric and a vector between points of the edge and the reference point of the piece.

11. The method according to any one of claims 4 to 6, 9 and 10, wherein the rate of variation of the fabric is equal, for each direction of the fabric, to a percentage of elongation of the fabric pattern in said direction.

[Fig. 1]

[Fig. 2]

[Fig. 3]

```
S1 ⟍    ┌──────────────────┐
         │     Pièce P      │
         │    Contour Ci    │
         └──────────────────┘
                  │
                  ▼
S2 ⟍    ┌──────────────────┐
         │   Ce = Ci + δe   │
         └──────────────────┘
                  │
                  ▼
              ╱╲                    non
S3 ⟍      ╱ Contrainte ╲ ─────────────────┐
           ╲ relative ? ╱                  │
              ╲╱                           │
              │ oui                        │
              ▼                            │
S4 ⟍    ┌──────────────────┐              │
         │   Cp = Ce + δp   │              │
         └──────────────────┘              │
                  │                        │
                  ▼                        │
S5 ⟍    ┌──────────────────┐              │
         │        Cp        │ ◄────────────┘
         └──────────────────┘
```

[Fig. 4]

```
S'1 ⟍   ┌──────────────────┐
          │     Pièce P      │
          │    Contour Ci    │
          └──────────────────┘
                   │
                   ▼
               ╱╲                   non
S'2 ⟍      ╱ Contrainte ╲ ──────────────────────┐
            ╲ relative ? ╱                        │
               ╲╱                                 │
               │ oui                              ▼
               ▼                        ┌──────────────────┐
S'3 ⟍   ┌──────────────────┐          │    C'o = Ci      │ ⟍ S'35
          │  C'o = Ci + δ'p  │          └──────────────────┘
          └──────────────────┘                   │
                   │                             │
                   ▼                             │
S'4 ⟍   ┌──────────────────┐                    │
          │  C'p = C'o + δ'e │ ◄─────────────────┘
          └──────────────────┘
                   │
                   ▼
S'5 ⟍   ┌──────────────────┐
          │       C'p        │
          └──────────────────┘
```

[Fig. 5]

T1 — P
Marge positionnement = 0

T2 — Parent = recherche pièce parent

T3 — Pièce a-t-elle un parent ?    non

oui

T4 — Calcul marge en X et en Y

T5 — Pièce = parent
Marge positionnement + = marge

T6 — Nouveau contour

[Fig. 6]

U1 — **Pièce = pièce P**
**Contour = contour primaire**

U2 — **Arête = recherche arête suivante**
**du contour (Contour)**

U3 — Y a-t-il une
arête suivante ?          non

oui

U4 — **Discrétisation de l'arête**

U5 — **Sous-arête = recherche sous-**
**arête suivante de l'arête (Pièce)**

U6 — Y a-t-il une sous-          non
arête suivante ?

oui

U7 — **Calcul contour espacement**
**sous-arête**

U8 — **Calcul contour espacement (arête)**

U9 — **Calcul contour espacement (pièce)**

[Fig. 7]

[Fig. 8] [Fig. 9] [Fig. 10] [Fig. 11]

[Fig. 12]

[Fig. 13]

**EP 3 986 191 B1**

**RÉFÉRENCES CITÉES DANS LA DESCRIPTION**

**Documents brevets cités dans la description**

- EP 0759708 A
- EP 0518473 A
- EP 2328729 A